# EUROPÄISCHE PATENTSCHRIFT

(11) **EP 3 377 859 B1**
(45) Veröffentlichungstag und Bekanntmachung des Hinweises auf die Patenterteilung: **29.04.2020**
(21) Anmeldenummer: 16798165.3
(22) Anmeldetag: 18.11.2016
(51) Int. Cl.: G01C 21/34, G08G 1/01

(54) **VERFAHREN UND VORRICHTUNG ZUR BEREITSTELLUNG VON AUFGEZEICHNETEN, ANONYMISIERTEN ROUTEN**
METHOD AND APPARATUS FOR THE PROVISION OF RECORDED, ANONYMISED ROUTES
PROCÉCÉ ET DISPOSITIF POUR LA MISE A DISPOSITION DE ROUTES ENREGISTRÉES ANONYMISÉES

(30) Priorität: 22.02.2016 DE 102016202659
(43) Veröffentlichungstag der Anmeldung: 26.09.2018
(73) Patentinhaber: Siemens Mobility GmbH, 81739 München (DE)
(72) Erfinder: BUSSER, Jens-Uwe, 85579 Neubiberg (DE)
(86) Internationale Anmeldenummer: PCT/EP2016/078101
(87) Internationale Veröffentlichungsnummer: WO 2017/144130

(56) Entgegenhaltungen:
- US-A1- 2015 308 848

## Beschreibung

Die Erfindung betrifft ein Verfahren und eine Vorrichtung zur Bereitstellung von aufgezeichneten, anonymisierten Routen, die jeweils eine räumliche Bewegung eines Objekts von einem ersten Endpunkt über aufeinanderfolgende Wegpunkte zu einem zweiten Endpunkt angeben und durch Positionsangaben für diese Wegpunkte aufgezeichnet sind und durch Entfernen von Objekt-identifizierenden Daten anonymisiert sind.

Die räumliche Bewegung eines Objekts von einem Startpunkt über aufeinanderfolgende Wegpunkte zu einem Zielpunkt wird als Route bezeichnet. Einem Objekt ist dabei üblicherweise ein Nutzer, beispielsweise eine natürliche Person zugeordnet. Zur Verfolgung der räumlichen Bewegung eines Objekts bzw. einer Person, auch Geo-Tracking genannt, gibt es mittlerweile eine Vielzahl von Datenquellen. Solche Routen werden beispielsweise mittels GPS-Ortung eines Smartphones, eines Tablets, eines Laptops oder eines Navigationssystems eines Benutzers bzw. Fahrzeugs aufgenommen. Weitere Datenquellen sind eine Funkzellenortung eines Mobilfunktelefons durch einen Mobilfunknetzbetreiber oder ein Kontakt zu WLAN- oder Bluetooth-Zugangspunkten. Ebenso können bei der Nutzung von elektronischen Zahlungssystemen und Bankautomaten mittels einer Kredit- oder Kundenkarte, eine Positionsangabe beziehungsweise einen Aufenthaltspunkt, eines Objekts erfasst werden. Auch elektronische Tickets oder RFID-Karten können bei ihrer Verwendung in öffentlichen Verkehrsmitteln oder beim Einkauf zur Ermittlung einer Route verwendet werden.

Positionsangaben werden bei GPS-Daten durch eine geografische Länge- und Breitenangabe und eventuell Höhenangaben beschrieben. Dabei sind unterschiedliche Formate wie beispielsweise ein GPS-Austauschformat, ein Geography Markup Language GML-Format oder auch ein Keyhole Markup Language KML-Format gebräuchlich. Neben den Positionsangaben werden zu einer Route oder auch zu einzelnen Wegpunkten Zeitangaben beziehungsweise Zeitstempel registriert. Zu einer Route werden üblicherweise auch Daten des Objekts selbst beziehungsweise des Nutzers des georteten Objekts gespeichert. Dies sind beispielsweise ein Autokennzeichen eines Fahrzeugs, eine Telefonnummer, eine IP-Adresse eines Mobilfunkgerätes oder auch Kartennummern oder Stammdaten einer Kreditkarte.

Positionsdaten können sehr nützlich sein zur Erbringung innovativer Dienstleistungen wie beispielsweise Staumeldungen, Informationen über relevante Verspätungen im Bahnverkehr oder Hinweise zu nahegelegenen Verpflegungsmöglichkeiten, aufgezeichnete Routen auch zur Feststellung und Vorhersage einer Auslastung von Verkehrsmitteln, zur Staufrüherkennung und Stauvermeidung.

Diese Informationen über zurückgelegte Wegstrecken eines betrachteten Objekts (Fahrzeug, Smartphone, etc.) ermöglichen aber auch Aussagen zum Verhalten der zugeordneten Person, sowie ihrer persönlichen Vorlieben und Eigenschaften. Daher werden diese Daten gemäß Datenschutzrecht als personenbezogene oder personenbeziehbare und damit eventuell sogar als besonders schützenswerte Daten eingestuft. Personenbezogene oder personenbeziehbare Daten dürfen in manchen Ländern nur aufgrund einer dedizierten gesetzlichen Grundlage oder einer qualifizierten Einverständniserklärung der Betroffenen erfasst, verarbeitet oder gespeichert werden. Werden diese Daten aber mit Einverständnis der Betroffenen erfolgreich anonymisiert, so dass kein Bezug zu Personen mehr herstellbar ist, so gelten diese Daten nicht mehr als personenbezogen oder personenbeziehbar, und die Einschränkungen aus dem Datenschutzrecht entfallen für weitere Verwendungen der Daten.

Bei einer Anonymisierung werden üblicherweise zumindest allgemein bekannte, Personen-identifizierende Daten sowie Pseudonyme, wie beispielsweise IP-Adresse oder Gerätekennzeichen, entfernt. Teilweise lassen sich bereits aus einem Start- oder Endpunkt einer Route weitreichende Informationen über die Person ziehen und somit die Zahl möglicher für diese Route in Frage kommender Personen sehr stark einschränken. Somit ist eine so genannte De-Anonymisierung der Route trotz Entfernen von Personen- beziehungsweise Objekt-identifizierenden Daten möglich. Eine Verwendung solcher Routendaten würde daher weiterhin das Einholen einer qualifizierten Einverständniserklärung aller Betroffenen für jeden neuen Verwendungszweck erfordern, was aber üblicherweise mit vertretbarem Aufwand nicht durchführbar ist. Eine Vielzahl aufgezeichneter Routen wäre somit von einer Weiterverarbeitung ausgeschlossen.

Die US 2015/308848 A1 beschreibt ein Gerät, das Fahrzeugen Routeninformation bereitstellt. Das Gerät umfasst eine Sammeleinheit für Historieninformation, die Routeninformation vieler Fahrzeuge sammelt. Auf einer Anzeigeeinheit werden Routen zwischen einem angegebenen Start- und Endpunkt derart angezeigt, dass Routenabschnitte in der Nähe privater Orte nicht identifiziert werden können, wenn die dargestellte Route mindestens einen privaten Ort enthält.

Es ist somit Aufgabe der vorliegenden Erfindung ein Verfahren und eine Vorrichtung zu schaffen, das bzw. die die Anonymisierung verbessert, eine De-Anonymisierung von Routendaten verhindert oder zumindest erschwert und somit deren Verwendung zur Weiterverarbeitung ermöglicht.

Die Aufgabe wird durch die in den unabhängigen Ansprüchen beschriebenen Maßnahmen gelöst. In den Unteransprüchen sind vorteilhafte Weiterbildungen der Erfindung dargestellt.

Das erfindungsgemäße Verfahren zur Bereitstellung von aufgezeichneten, anonymisierten Routen, die jeweils eine räumliche Bewegung eines Objekts von einem ersten Endpunkt über aufeinanderfolgende Wegpunkte zu einem zweiten Endpunkt angeben und durch eine Positionsangabe für diese Wegpunkte aufgezeichnet sind und durch Entfernen von objektspezifischen Daten anonymisiert sind, weist folgende Schritte auf:
Ein Aufteilen eines geographischen Bereichs, in dem eine Route enthalten ist in zumindest einen Teilbereich, ein Entfernen aller Positionsangaben einer Route innerhalb derjenigen Teilbereiche, in denen zumindest ein Endpunkt der Route enthalten ist und ein Ausgeben der verbleibenden Positionsangaben der Route zur weiteren Analyse und/oder Steuerung.

Teilbereiche, in denen zumindest ein Endpunkt der Route enthalten ist werden nachfolgend auch als End-Teilbereiche bezeichnet. Durch das Entfernen der Positionsangaben einer Route innerhalb der End-Teilbereiche der Route, können Endpunkte von Routen nur noch sehr grob identifiziert werden. Die Endpunkte werden sozusagen maskiert und eine De-Anonymisierung der Route, d.h. eine Ermittlung der Identität des sich bewegenden Objekts bzw. der Person durch Rückschluss auf den Start- und/oder Zielpunkt ist somit nicht mehr möglich. Start- oder Zielpunkt entsprechen dabei dem ersten oder zweiten Endpunkt einer Route. Die Positionsangaben zu den verbleibenden Wegpunkten der Route, d.h. die Wegpunkte zwischen den End-Teilbereichen der Route, werden unverändert beibehalten. Vorteilhafterweise verringert sich durch das Verfahren der benötigte Speicherplatz zur Speicherung der Positionsangaben einer Route.

Dabei wird die Größe der End-Teilbereiche derart eingerichtet, dass mindestens eine vorgebbare Anzahl von Endpunkten von Routen innerhalb eines End-Teilbereichs liegt.

Damit ist es auch bei Kenntnis eines ersten Endpunkts und damit eines ersten End-Teilbereichs erheblich erschwert, auf den zweiten End-Teilbereich und damit den zweiten Endpunkt zu schließen.

Zusätzlich oder alternativ dazu wird die Größe der einzelnen Teilbereiche nach geographischen Gegebenheiten eingerichtet. Solche Teilbereiche umfassen beispielsweise ein bestimmtes Dorf, oder einen Stadtteil oder einen Straßenzug bzw. angrenzende Bereiche.

Bei Vorliegen der ersten Anspruchsoption können anschließend alle Teilbereiche gleich groß eingerichtet werden.

Dies bedeutet, dass die Größe aller Teilbereich entsprechend der größten ermittelten Mindestgröße der End-Teilbereiche gewählt wird. Dies reduziert die Komplexität des Verfahrens, da ein einfaches Aufteilungsschema für die Teilbereiche verwendet werden kann. So kann beispielsweise der betrachtete geographische Bereich in Planquadrate der ermittelten Mindestgröße zur Definition der Teilbereiche verwendet werden.

In einer anderen Variante werden die einzelnen Teilbereiche mit unterschiedlicher Größe eingerichtet.

Dies hat den Vorteil, dass ein End-Teilbereich, in dem viele Endpunkte von Routen liegen, sehr klein gewählt werden kann, da durch die große Anzahl der Routen nicht auf das einzelne sich bewegende Objekt geschlossen werden kann. Entsprechend ist der zur Auswertung nutzbare verbleibende Teil der Route größer. Dies ist beispielsweise für End-Teilbereiche der Fall, in denen öffentliche Verkehrsknotenpunkte, wie beispielsweise ein Bahnhof oder ein Krankenhaus oder ein Gewerbegebiet liegen. Die Größe eines End-Teilbereichs in einem wenig bevölkerten geographischen Bereich muss dagegen räumlich viel größer gewählt werden.

In einer nicht erfindungsgemäßen Variante werden lediglich der Endpunkt einer Route und die auf den Endpunkt bis zum ersten Erreichen eines Randes des End-Teilbereichs folgenden Wegpunkte der Route entfernt.

Dadurch bleiben auch solche Wegpunkte einer Route erhalten, die den End-Teilbereich verlassen und anschließend den gleichen End-Teilbereich noch einmal passieren.

Das Aufteilen des geographischen Bereichs, in dem eine Route enthalten ist, in Teilbereiche und das Entfernen aller Positionsdaten innerhalb der End-Teilbereiche ermöglicht eine gezielte Maskierung der Endpunkte der Route. Ein De-Anonymisieren von Routendaten durch Ermittlung der genauen geographischen Lage des ersten und zweiten Endpunkts einer Route ist somit erheblich erschwert. Die verbleibenden Positionsangaben der Route können Datenschutz-rechtlich unbedenklich zu einer weiteren Verarbeitung ausgegeben und verwendet werden. Dadurch wird die Bereitschaft von Nutzern bzw. Objekten erhöht, dem Inhaber einer Datensammlung ein Einverständnis für die weitere Verwendung seiner Routendaten zu geben. Ebenso muss bei der Verwendung der anonymisierten Daten für andere Verwendungszwecke nicht erneut das Einverständnis des Nutzers eingeholt werden. Das vorgeschlagene Verfahren reduziert zudem die benötigte Speicherkapazität für Routendaten und ermöglicht durch einfache Schemata zur Aufteilung in Teilbereiche die Ausführung mit geringem Rechenaufwand.

Eine erfindungsgemäße Vorrichtung zur Bereitstellung einer aufgezeichneten anonymisierten Route, die eine räumliche Bewegung eines Objekts von einem ersten Endpunkt über aufeinanderfolgende Wegpunkte zu einem zweiten Endpunkt angibt, eine Positionsangabe für diese Wegpunkte aufzeichnet und durch Entfernen von Objekt-identifizierenden Daten anonymisiert ist, umfasst eine Aufteilungseinheit, die derart ausgebildet ist, einen geographischen Bereich, in dem eine Route enthalten ist, in zumindest einen Teilbereich aufzuteilen, eine Maskierungseinheit, die derart ausgebildet ist, alle Positionsangaben einer Route innerhalb derjenigen Teilbereiche, in denen zumindest ein Endpunkt der Route enthalten ist, zu entfernen und eine Ausgabeeinheit, die derart ausgebildet ist, die verbleibenden Positionsangaben zu der Route zur weiteren Analyse und/oder Speicherung auszugeben,
wobei in der Maskierungseinheit die Größe der End-Teilbereiche dazu eingerichtet wird, dass mindestens eine vorgebbare Anzahl von Endpunkten von verschiedenen aufgezeichneten Routen innerhalb eines End-Teilbereichs liegt und/oder die Größe der einzelnen Teilbereiche nach geographischen Gegebenheiten eingerichtet wird.

Eine solche Vorrichtung kann aufgezeichnete Routen derart aufbereiten, dass eine Identität des Objekts, dessen Bewegung als Route aufgezeichnet wurde, nicht oder nur äußerst schwer ermittelt werden kann. Eine Vorrichtung, die derart ausgebildet ist das Verfahren entsprechend den vorgenannten Verfahrensschritten durchzuführen, benötigt eine geringere Speicherkapazität zur Speicherung der anonymisierten Routen. Insbesondere bei Verwendung von Teilbereichen mit einheitlicher Größe kann das Verfahren durch eine einfache Rechenvorrichtung ausgeführt werden. Andererseits kann durch eine dynamische Größenwahl der Teilbereiche der Informationsverlust an Positionsangaben minimiert werden. Diese stehen dann zur weiteren Auswertung beispielsweise für verkehrstechnische Anwendungen - wie beispielsweise die Ermittlung von Verkehrsstaus oder zur Verkehrsbedarfsplanung - bereit.

Ein entsprechendes Computerprogrammprodukt, das direkt in ein speicherprogrammierbares Bauteil ladbar ist und Programmcodeteile umfasst, die dazu geeignet sind, die Schritte des erfindungsgemäßen Verfahrens durchzuführen, kann somit auch auf herkömmlichen Computern durchgeführt werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Figur 1: ein Ausführungsbeispiel des erfindungsgemäßen Verfahrens als Ablaufdiagramm;
- Figur 2: ein Ausführungsbeispiel einer erfindungsgemäßen Vorrichtung in Blockdarstellung;
- Figur 3: ein erstes Beispiel einer Route in einem geographischen Bereich dargestellt auf einer Straßenkarte;
- Figur 4: verbleibende Routendaten bei Anwendung des erfindungsgemäßen Verfahrens auf die in Figur 3 gezeigte Route;
- Figur 5: eine Darstellung mehrerer Routen in einem geographischen Bereich dargestellt auf einer Straßenkarte; und
- Figur 6: verbleibende Routendaten bei Anwendung des erfindungsgemäßen Verfahrens auf die in Figur 5 gezeigten Routen.

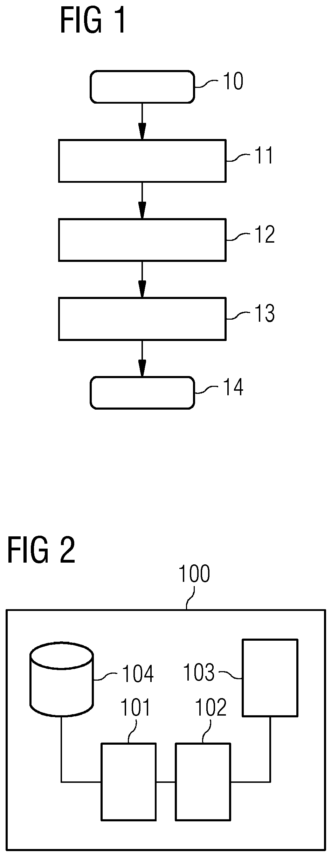

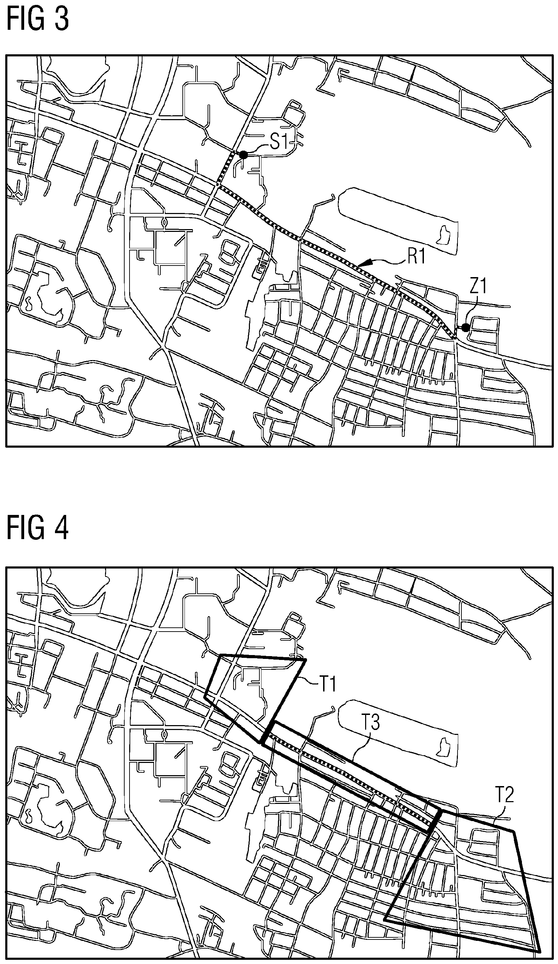

Einander entsprechende Teile sind in allen Figuren mit den gleichen Bezugszeichen versehen. Das erfindungsgemäße Verfahren wird nun anhand der in Figur 1 dargestellten Verfahrensschritte angewandt auf die den Figuren 3 bis 6 dargestellten Routen erläutert.

Die Sammlung und Verarbeitung von Routendaten ist Datenschutz-rechtlich äußerst kritisch, so dass ein Einsatz solcher Daten, insbesondere in Ländern mit strenger Datenschutzgesetzgebung stark eingeschränkt ist. Eine Verwendung der Routendaten ist oftmals nur mit dem Einverständnis der Nutzer, bzw. des sich bewegenden Objektes und/oder durch eine Anonymisierung der Routendaten möglich. Mit dem erfindungsgemäßen Verfahren wird nun eine verbesserte Anonymisierung der Routendaten möglich, sodass eine De-Anonymisierung weiter erschwert wird.

In Figur 1 ist ein Ablaufdiagramm des Verfahrens dargestellt. Im Ausgangszustand 10 liegen aufgezeichnete und anonymisierte Routen vor. Eine Route wird dabei als eine räumliche Bewegung eines Objekts von einem ersten Endpunkt über aufeinanderfolgende Wegpunkte zu einem zweiten Endpunkt angesehen. Eine solche Route ist durch Positionsangaben für die Wegpunkte aufgezeichnet. Objekt-identifizierende Angaben, wie beispielsweise Name oder Adresse einer Person, ein Autokennzeichen eines Fahrzeugs oder eine IP-Adresse oder Gerätekennzeichen beispielsweise eines Smartphones sind zur Anonymisierung entfernt. Diese aufgezeichneten und anonymisierten Daten werden beispielsweise durch eine Speichereinheit oder eine Datenbank, beispielsweise in einem Server bereitgestellt. Im Verfahrensschritt 11 wird nun ein geographischer Bereich, in dem mindestens eine Route enthalten ist, in zumindest einen Teilbereich aufgeteilt.

In Figur 3 ist beispielhaft eine Route R1 im geographischen Bereich einer Stadt und eingezeichnet in einer Straßenkarte dargestellt. Die Route R1 beginnt an einem ersten Endpunkt, hier Startpunkt S1 und führt über die gepunktet eingezeichnete Strecke zu einem zweiten Endpunkt Z1, hier dem Zielpunkt der Route. Der geographische Bereich in dem die Route enthalten ist, wird nun in Teilbereiche T1, T2 und T3 aufgeteilt, siehe Figur 4. Die Teilbereiche T1, T2, T3 sind beispielsweise an strukturelle Gegebenheiten des geographischen Bereichs, hier beispielsweise an abgegrenzte Wohngebiete oder an Straßenführung von Hauptverkehrswegen ausgerichtet. Teilbereiche können auch ganze Stadtteile, Ortschaften oder die Umgebung spezieller Verkehrsknotenpunkte sein.

Im Verfahrensschritt 12 werden nun alle Positionsangaben einer Route innerhalb von End-Teilbereichen, das heißt derjenigen Teilbereiche, in denen zumindest ein Endpunkt der Route enthalten ist, entfernt. Im genannten Beispiel werden nun alle Positionsangaben der Route R1 im Teilbereich T1 und im Teilbereich T2 entfernt. Die Teilbereiche T1, T2 maskieren somit die Endpunkte S1, Z1 der Route R1.

Im Verfahrensschritt 13 werden nun die verbleibenden Positionsangaben der Route, im genannten Beispiel die Positionsangaben der Wegpunkte, die in den Teilbereich T3 fallen, zur weiteren Analyse oder auch Steuerung ausgegeben. Diese Ausgabe kann beispielsweise an eine interne Speichereinheit oder auch an eine externe Vorrichtung, wie beispielsweise eine Analysevorrichtung oder einen zentralen Server zur Routenauswertung ausgegeben werden. Eine De-Anonymisierung der verbleibenden Routendaten ist nun erheblich erschwert oder gar unmöglich. Die ausgegebenen Routendaten können ohne weitere Sicherheitsvorkehrungen und somit schneller prozessiert und analysiert werden.

Damit ist der Endzustand 14 des Verfahrens erreicht.

Die Größe, d.h. die geographische bzw. räumliche Ausdehnung, der ermittelten Teilbereiche kann dynamisch gewählt werden. Insbesondere kann die Größe von Teilbereichen abhängig von einer Mindestanzahl von Endpunkten von verschiedenen Routen, die innerhalb eines End-Teilbereichs liegen, gewählt werden. Es muss also immer eine bestimmte vorgebbare Mindestanzahl an Routen in einem End-Teilbereich beginnen oder enden. Damit ist sichergestellt, dass auch bei Kenntnis eines ersten Endpunktes nicht oder nur erschwert auf den Teilbereich des zweiten Endpunkts und damit auf einen möglichen Endpunkt in diesem zweiten Teilbereich zurückgeschlossen werden kann. Dies ist insbesondere dann der Fall, wenn die verschiedenen in einem End-Teilbereich endenden/beginnenden Routen einen unterschiedlichen Routenverlauf aufweisen.

Ein End-Teilbereich, beispielsweise um eine Bahnstation, Bushaltestelle, etc., kann kleiner gewählt werden als ein End-Teilbereich um eine abgelegene kleine Wohnanlage. Durchqueren Teile der Route nach Verlassen eines End-Teilbereichs diesen End-Teilbereich der Route erneut, so werden diese Teile der Route nicht entfernt, da eine solche Entfernung keine weiteren Vorteile bei der Maskierung des Endpunktes mehr bringt.

Die Größe der einzelnen Teilbereiche kann entsprechend unterschiedlich eingerichtet werden. Es können aber auch Gruppen von Teilbereichen mit jeweils gleicher Größe eingerichtet werden, wobei die unterschiedlichen Gruppen dann unterschiedliche Größe aufweisen. Alternativ können auch alle Teilbereiche mit gleicher Größe eingerichtet werden. Dabei muss die Größe der Teilbereiche entsprechend der Größe des größten End-Teilbereiches, der die geforderten Bedingungen erfüllt, eingerichtet werden. Eine unkomplizierte Aufteilung des geographischen Bereichs kann beispielsweise durch eine Aufteilung in Planquadrate, beispielsweise bezüglich Längen- und Breitengrad, durchgeführt werden.

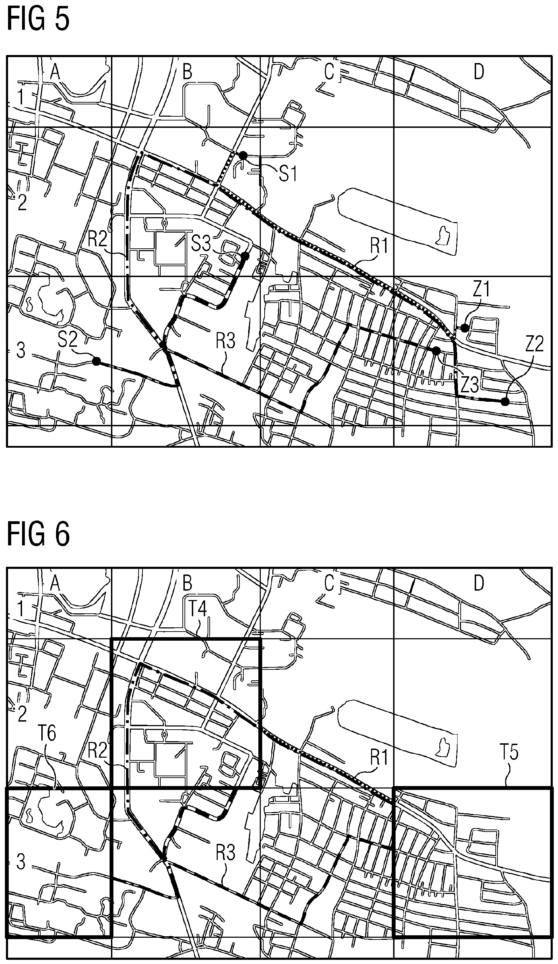

Figur 5 und 6 zeigen ein entsprechendes Ausführungsbeispiel, in dem die Aufteilung in Teilbereiche anhand eines Gitternetzes durchgeführt ist. Der dargestellte geographische Bereich ist mittels eines Gitternetzes in Planquadrate mit den Koordinaten A bis D sowie 1 bis 4 eingeteilt.

Figur 5 zeigt nun drei unterschiedliche Routen R1, R2, R3, mit jeweils einem ersten und zweiten Endpunkt S1, Z1, S2, Z2, S3, Z3. Mit einer Aufteilung des gezeigten geographischen Bereichs in Teilbereiche entsprechend dem eingezeichneten Gitternetz werden nun alle Positionsangaben der Routen R1, R2, R3, die in einem Teilbereich enden, entfernt. Diese End-Teilbereiche sind in Figur 6 separat markiert und mit T4, T5, T6 bezeichnet.

Es werden der jeweilige Endpunkt selbst und alle an dem Endpunkt anschließenden Wegpunkte der Route bis zum Rand des End-Teilbereichs T4, T5, T6 gelöscht. Im dargestellten Beispiel werden aus dem End-Teilbereich T4 die Positionsangaben der Route R1, punktiert dargestellt, vom Endpunkt S1 bis zum Wegpunkt am Rand der Zelle T4, entfernt. Ebenso werden die Positionsangaben der Route R3, gestrichelt dargestellt, von dem Endpunkt S3 bis zum Rand des End-Teilbereichs T4 entfernt. Die Positionsangaben zu den Wegpunkten der Route R2, gestrichelt dargestellt, die innerhalb des End-Teilbereichs T4 verlaufen, diesen aber passieren, bleiben unverändert erhalten. Aus dem End-Teilbereichs T5 werden die Positionsangaben der Route R1 von dem Endpunkt Z1, der Route R2 vom Endpunkt Z2, der Route R3 vom Endpunkt Z3 jeweils bis zum Rand des End-Teilbereichs T5 entfernt. Aus dem End-Teilbereich T6 werden die Positionsangaben der Route R2 von dem Endpunkt S2 bis zum Rand des End-Teilbereichs T6 entfernt.

Die Positionsangaben der Route R1, der Route R2 sowie der Route R3, die in den Teilbereichen mit den Koordinaten B3, C2 und C3 gegeben sind bleiben unverändert erhalten; außerdem bleiben die Positionsangaben der Route R2 im Teilbereich mit der Koordinate B2 bzw. End-Teilbereich T4, wie oben bereits erläutert, erhalten. Diese Positionsangaben können nun ausgegeben bzw. abgespeichert und zur weiteren Analyse oder zu Steuerungszwecken ausgegeben werden. Die Daten können beispielsweise zukünftig autonom fahrende Fahrzeuge oder Geräte verwendet werden, um das Fahrzeug oder Gerät auf der zeitgünstigsten Route zu leiten.

In einer Ausführungsform des Verfahrens werden in dem geographischen Bereich, in dem die mindestens eine betrachtete Route enthalten ist, lediglich End-Teilbereiche ermittelt. Für den geographischen Bereich außerhalb dieser End-Teilbereiche werden keine Teilbereiche ermittelt. Der geographische Bereich außerhalb dieser End-Teilbereiche kann auch als ein einziger Rest-Teilbereich angesehen werden. Innerhalb der End-Teilbereiche werden die Positionsangaben der Endpunkte und an die Endpunkte anschließenden Wegpunkte der betrachteten Route gelöscht. Außerhalb der End-Teilbereiche liegende Wegpunkte und Wegpunkte, die lediglich den End-Teilbereich passieren, also hinein und wieder hinausführen, bleiben erhalten.

Figur 2 zeigt nun eine Vorrichtung zur Bereitstellung aufgezeichneter anonymisierter Routen, die entsprechend dem beschriebenen Verfahren bearbeitet wurden.

Die Vorrichtung 100 umfasst eine Aufteilungseinheit 101, eine Maskierungseinheit 102, eine Ausgabeeinheit 103, sowie optional eine Speichereinheit 104. Die Einheiten sind miteinander verbunden. Die Vorrichtung kann beispielsweise aus einem oder mehreren Mikroprozessoren aufgebaut sein. Die einzelnen Einheiten 101, 102, 103, 104 können in einer einzigen physischen Einheit integriert sein oder aber in mehreren voneinander separierten physischen Einheiten realisiert sein. Die Speichereinheit 104 kann extern, beispielsweise als ein Datenserver, ausgebildet sein. In der Speichereinheit 104 werden aufgezeichnete Routendaten entweder mit oder auch ohne objektidentifizierende Angaben gespeichert. Die Positionsdaten mindestens einer Route, üblicherweise aber einer Vielzahl von Routen, werden von der Speichereinheit 104 der Aufteilungseinheit 101 bereitgestellt und an die Aufteilungseinheit 101 übermittelt. Die Aufteilungseinheit 101 kann auch aktiv eine bestimmte Anzahl von Routen oder alle in einem bestimmten Zeitintervall aufgezeichnete Routen von der Speichereinheit 104 anfordern und einlesen. Die Aufteilungseinheit 101 ist derart ausgebildet, den geographischen Bereich in dem die eingelesenen Routen enthalten sind in mindestens einen Teilbereich aufzuteilen. Üblicherweise wird Aufteilung im Teilbereich iterativ vorgenommen. Dazu wird eine erste Aufteilung vorgenommen. Die Aufteilungseinheit 101 überprüft nun, ob weitere Bedingungen für die Aufteilung der Teilbereiche vorliegen. Beispielsweise kann als Bedingung vorliegen, dass die End-Teilbereiche eine Mindestanzahl von Endpunkten enthalten. Entsprechend wird in einem oder mehreren Schritten die Aufteilung an die Bedingungen angepasst bis alle gültigen Bedingungen erfüllt sind.

Die Aufteilungseinheit 101 kann in einer Ausführungsform alle Teilbereiche gleich groß wählen, wobei die Größe der Teilbereiche durch die Mindestgröße der End-Teilbereiche vorgegeben wird. In einer anderen Ausführungsform der Aufteilungseinheit 101 können die Teilbereiche und insbesondere die End-Teilbereiche unterschiedliche Größe aufweisen, wobei jeder einzelne Teilbereich die zugrunde liegenden Bedingungen erfüllen muss. Für den geographischen Bereich in dem keine Route endet, der also kein End-Teilbereich ist, können beliebig große Teilbereiche oder lediglich ein einziger Restteilbereich festgelegt werden.

Die Maskierungseinheit 102 ist derart ausgebildet, innerhalb eines End-Teilbereichs alle Positionsangaben vom Endpunkt bis zum ersten Kontakt mit dem Rand des Maskierungsbereichs zu entfernen. Die Maskierungseinheit 102 gibt die resultierenden Positionsangaben nun an eine Ausgabeeinheit 103 weiter. Die Ausgabeeinheit 103 gibt die Routendaten zur weiteren Analyse und/oder Steuerung beispielsweise an eine Analysevorrichtung aus. Insbesondere können die resultierenden Routendaten in der Ausgabeeinheit 103 gespeichert werden. Die resultierenden Routendaten müssen nicht verschlüsselt abgelegt werden, um eine die De-Anonymisierung zu verhindern, da dies durch das Entfernen der Endstücke der Routen bereits erheblich erschwert oder auch verhindert wird.

Die Vorrichtung 100 kann integriert beispielsweise in einem Routenerfassungsserver oder auch als separate Vorrichtung ausgebildet sein.

Alle beschriebenen und/oder gezeichneten Merkmale können im Rahmen der Verbindung vorteilhaft miteinander kombiniert werden. Die Erfindung ist nicht auf die beschriebenen Ausführungsbeispiele beschränkt.

## Patentansprüche

1. Verfahren zur Bereitstellung von aufgezeichneten anonymisierten Routen (R1), die jeweils eine räumliche Bewegung eines Objekts von einem ersten Endpunkt (S1) über aufeinanderfolgende Wegpunkte zu einem zweiten Endpunkt (Z1) angeben und durch eine Positionsangabe für diese Wegpunkte aufgezeichnet sind und durch Entfernen von Objekt-identifizierenden Daten anonymisiert sind, mit den Schritten:
- Aufteilen (11) eines geographischen Bereichs, in dem eine Route enthalten ist, in zumindest einen Teilbereich (T1, T2, T3),
- Entfernen (12) aller Positionsangaben einer Route (R1) innerhalb von End-Teilbereichen der Route, d.h. innerhalb derjenigen Teilbereiche (T1, T2), in denen zumindest ein Endpunkt (S1, Z1) der Route enthalten ist, und
- Ausgeben (13) der verbleibenden Positionsangaben der Route zur weiteren Analyse und/oder Steuerung, **dadurch gekennzeichnet, dass** die Größe der End-Teilbereiche derart eingerichtet wird, dass mindestens eine vorgebbare Anzahl von Endpunkten von verschiedenen aufgezeichneten Routen innerhalb eines End-Teilbereichs liegt und/oder die Größe der einzelnen Teilbereiche nach geographischen Gegebenheiten eingerichtet wird.

2. Verfahren nach Anspruch 1, wobei die einzelnen Teilbereiche mit unterschiedlicher Größe eingerichtet werden.

3. Vorrichtung zur Bereitstellung einer aufgezeichneten anonymisierten Route (R1), die eine räumliche Bewegung eines Objekts von einem ersten Endpunkt (S1) über aufeinanderfolgende Wegpunkte zu einem zweiten Endpunkt (Z1) angibt und durch eine Positionsangabe für diese Wegpunkte aufgezeichnet und durch Entfernen von Objekt-identifizierenden Daten anonymisiert ist, umfassend:
- eine Aufteilungseinheit (101), die dazu ausgebildet ist einen geographischen Bereich, in dem eine Route enthalten ist, in zumindest einen Teilbereich aufzuteilen,
- eine Maskierungseinheit (102), die dazu ausgebildet ist alle Positionsangaben einer Route innerhalb von End-Teilbereichen der Route, d.h. innerhalb derjenigen Teilbereiche, in denen zumindest ein Endpunkt der Route enthalten ist, zu entfernen und
- eine Ausgabeeinheit (103), die dazu ausgebildet ist, die resultierenden Positionsangaben der Route zur weiteren Analyse und/oder Steuerung, auszugeben,
**dadurch gekennzeichnet, dass**
in der Maskierungseinheit
die Größe der End-Teilbereiche derart eingerichtet wird, dass mindestens eine vorgebbare Anzahl von Endpunkten von verschiedenen aufgezeichneten Routen innerhalb eines End-Teilbereichs liegt und/oder die Größe der einzelnen Teilbereiche nach geographischen Gegebenheiten eingerichtet wird.

4. Vorrichtung nach Anspruch 3, wobei die Aufteilungseinheit (101) dazu ausgebildet ist, die einzelnen Teilbereiche mit unterschiedlicher Größe einzurichten.

5. Computerprogrammprodukt, das in ein Speicherprogrammierbares Bauteil ladbar ist, umfassend Programmcodeteile, die dazu ausgebildet sind, die Schritte des Verfahrens nach einem der Ansprüche 1 und 2 durchzuführen.

## Claims

1. Method for providing recorded, anonymized routes (R1), which each indicate a spatial movement of an object from a first end point (S1) to a second end point (Z1) via successive path points and which are recorded by means of a position indication for said path points and anonymized by removing object-identifying data, having the steps of:
- dividing (11) a geographical region in which a route is contained into at least one sub-region (T1, T2, T3),
- removing (12) all the position indications of a route (R1) within end sub-regions of the route, i.e. within those sub-regions (T1, T2) in which at least one end point (S1, Z1) of the route is contained, and
- outputting (13) the remaining position indications of the route for further analysis and/or control, **characterized in that** the size of the end sub-regions is configured in such a way that at least a predeterminable number of end points of different recorded routes lies within an end sub-region and/or the size of the individual sub-regions is configured in accordance with geographical circumstances.

2. Method according to Claim 1, wherein the individual sub-regions are configured with different sizes.

3. Device for providing a recorded, anonymized route (R1), which indicates a spatial movement of an object from a first end point (S1) to a second end point (Z1) via successive path points and is recorded by means of a position indication for said path points and anonymized by removing object-identifying data, comprising:
- a division unit (101) that is designed in such a way as to divide a geographical region in which a route is contained into at least one sub-region,
- a masking unit (102) that is designed in such a way as to remove all the position indications of a route within end sub-regions of the route, i.e. within those sub-regions in which at least one end point of the route is contained, and
- an output unit (103) which is designed in such a way as to output the resulting position indications of the route for further analysis and/or control,
**characterized in that**
in the masking unit the size of the end sub-regions is configured in such a way that at least a predeterminable number of end points of different recorded routes lies within an end sub-region and/or the size of the individual sub-regions is configured in accordance with geographical circumstances.

4. Device according to Claim 3, wherein the division unit (101) is designed in such a way as to configure the individual sub-regions with different sizes.

5. Computer program product that can be loaded into a stored-program component, comprising program code segments that are appropriate for carrying out the steps of the method according to one of Claims 1 and 2.

## Revendications

1. Procédé pour la mise à disposition de routes enregistrées anonymisées (R1) qui indiquent respectivement un déplacement spatial d'un objet d'un premier point final (S1) vers un deuxième point final (Z1) en passant par des points de chemin successifs et qui sont enregistrées par une indication de position pour ces points de chemin et qui sont anonymisées par élimination de données d'identification de l'objet, comportant les étapes suivantes :
- répartition (11) d'une zone géographique contenant une route en au moins une sous-zone (T1, T2, T3),
- élimination (12) de toutes les indications de position d'une route (R1) dans des sous-zones finales de la route, c'est-à-dire dans les sous-zones (T1, T2) dans lesquelles se trouve au moins un point final (S1, Z1) de la route et
- émission (13) des indications de position restantes de la route pour analyse et/ou commande subséquentes, **caractérisé en ce que** la taille des sous-zones finales
est configurée de telle sorte qu'au moins un nombre prédéterminable de points finaux de différentes routes enregistrées se trouve dans une sous-zone finale et/ou la taille des différentes sous-zones est configurée selon des conditions géographiques.

2. Procédé selon la revendication 1, dans lequel les différentes sous-zones sont configurées avec une taille différente.

3. Dispositif pour la mise à disposition d'une route enregistrée anonymisée (R1) qui indique un déplacement spatial d'un objet d'un premier point final (S1) vers un deuxième point final (Z1) en passant par des points de chemin successifs et qui est enregistrée par une indication de position pour ces points de chemin et qui est anonymisée par élimination de données d'identification de l'objet, comprenant :
- une unité de répartition (101) qui est conçue pour répartir une zone géographique contenant une route en au moins une sous-zone,
- une unité de masquage (102) qui est conçue pour éliminer toutes les indications de position d'une route dans des sous-zones finales de la route, c'est-à-dire dans les sous-zones dans lesquelles se trouve au moins un point final de la route et
- une unité d'émission (103) qui est conçue pour émettre les indications de position résultantes de la route pour analyse et/ou commande subséquentes,
**caractérisé en ce que** la taille des sous-zones finales est configurée de telle sorte qu'au moins un nombre prédéterminable de points finaux de différentes routes enregistrées se trouve dans une sous-zone finale et/ou la taille des différentes sous-zones est configurée selon des conditions géographiques.

4. Dispositif selon la revendication 3, dans lequel l'unité de répartition (101) est conçue pour configurer les différentes sous-zones avec une taille différente.

5. Produit de programme informatique qui peut être chargé dans un composant programmable par mémoire, comprenant des parties de code de programme qui sont conçues pour exécuter les étapes du procédé selon l'une des revendications 1 et 2.
